# EUROPÄISCHE PATENTSCHRIFT

(11) **EP 0 659 833 B1**
(45) Veröffentlichungstag und Bekanntmachung des Hinweises auf die Patenterteilung: **16.08.2000**
(21) Anmeldenummer: 94810718.0
(22) Anmeldetag: 13.12.1994
(51) Int. Cl.: C08L 63/00, C08L 51/04, C08G 59/56

(54) **Zusammensetzungen auf der Basis von Epoxidharzen, Zähigkeitsvermittlern und Aminen**
Compositions based on epoxy resins, impact modifiers and amines
Compositions à base de résines époxydes, d'agents d'amélioration de la ténacité et d'amines

(30) Priorität: 21.12.1993 CH 27894
(43) Veröffentlichungstag der Anmeldung: 28.06.1995
(73) Patentinhaber: Ciba Specialty Chemicals Holding Inc., 4057 Basel (CH)
(72) Erfinder: Setiabudi, Frans, Dr., D-79427 Eschbach (DE)

(56) Entgegenhaltungen:
- EP-A- 0 169 066
- EP-A- 0 514 335
- EP-A- 0 578 613
- WO-A-93/21274
- DE-A- 2 030 054
- US-A- 3 609 121

## Beschreibung

Die vorliegende Erfindung betrifft eine Suspension, enthaltend eine lagerstabile Suspension aus einem Epoxidharz und einem darin suspendierten Zähigkeitsvermittler, der keine bezüglich eines härtbaren Epoxidharzsystems reaktiven Gruppen aufweist, ein spezielles Epoxidharzhärtungsmittelgemisch sowie gegebenenfalls einen Härtungsbeschleuniger, übliche Füllstoffe, Verstärkungsmaterialien oder Zusätze.

Es ist bekannt, härtbaren Epoxidharzgemischen Zähigkeitsvermittler (sogenannte "toughener"), wie beispielsweise Core/Shell-Polymere, zuzusetzen, um die Zähigkeitseigenschaften der aus diesen Epoxidharzgemischen hergestellten Formstoffe zu verbessern.

Die in der EP-A-0 449 776 offenbarten, einen Zähigkeitsvermittler, beispielsweise ein Core/Shell-Polymer, enthaltenen Epoxidharzzusammensetzungen werden mittels eines Härtungsmittelgemisches bestehend aus einem Carbonsäureanhydrid und einer Verbindung mit zwei reaktiven Wasserstoffatomen, ausgehärtet.

Im US-Patent 4,778,851 werden Epoxidharze beschrieben, die eine diskontinuierliche Phase von gepfropften Kautschukpartikeln enthalten, die aus einem im Epoxidharz unlöslichen Kern und einer aufgepfropften Hülle bestehen. Die Hülle enthält eine reaktive Gruppe, beispielsweise eine Glycidylgruppe, welche unter den Härtungsbedingungen des Epoxidharzsystems mitreagiert.

Es wurde nun gefunden, dass eine Erhöhung der Zähigkeit einer ausgehärteten Epoxidharzzusammensetzung dadurch erreicht werden kann, wenn ein spezifisches Gemisch bestehend aus einer Epoxidharz/Zähigkeitsvermittler-Suspension, einer ganz spezifischen Härtungsmittelkombination und gegebenenfalls weiteren Zusätzen eingesetzt wird. Die durch diese Kombination von Substanzen erreichten synergistischen Effekte, die eine erhebliche Erhöhung der Zähigkeiten bewirken, haben aber keine oder nur sehr geringe Einschränkungen in Bezug auf andere vorteilhafte physikalischen Eigenschaften der aus diesen Epoxidharzzusammensetzungen hergestellten Formstoffe, Verklebungen, Prepregs oder Beschichtungen.

Gegenstand vorliegender Erfindung ist somit eine Suspension einer Epoxidharzzusammensetzung, enthaltend
A) eine lagerstabile Suspension aus einem Epoxidharz und einem darin suspendierten Zähigkeitsvermittler, der bezüglich eines Epoxidharzsystems keine reaktiven Gruppen aufweist,
B) ein Härtungsmittelgemisch bestehend aus
   B1) Dicyandiamid,
   B2) einem cycloaliphatischen Polyamin und
   B3) einem Polyoxyalkylenamin,
   und gegebenenfalls
C) einen Härtungsbeschleuniger, übliche Füllstoffen, Verstärkungsmaterialien oder Zusätze.

Für die Herstellung der lagerstabilen Suspensionen A) eignen sich als Epoxidharze die in der Epoxidharztechnik üblichen Epoxidharze. Beispiele für Epoxidharze sind:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.
   Die Glycidylether dieses Typs leiten sich beispielsweise von acyclischen Alkoholen ab, wie von Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly(oxytetramethylen)-glykolen, Pentan-1,5-diol, Hexan-1,6-diol, Hexan-2,4,6triol, Glycerin, 1,1,1-Trimethylolpropan, Pentaerythrit, Sorbit, sowie von Polyepichlorhydrinen.
   Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan ab, oder sie besitzen aromatische Kerne, wie N,N-Bis-(2-hydroxyethyl)-anilin oder p,p'-Bis-(2-hydroxyethylamino)-diphenylmethan.
   Die Glycidylether können sich auch von einkerningen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, solche der oben genannten Art.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.
   Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly-(S-glycidyl)-verbindungen, beispielsweise Di-S-glycidylderivate, die sich von Dithiolen, wie beispielsweise Ethan-1,2-dithiol oder Bis-(4-mercaptomethylphenyl)-ether ableiten.
V) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3 ,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(55-dimethyl-1-glycidylhydantoin-3-yl)-propan.

Bevorzugt verwendet man zur Herstellung der lagerstabilen Suspensionen einen flüssigen oder festen Polyglycidylether oder -ester, insbesondere einen flüssigen oder festen Bisphenoldiglycidylether oder einen festen oder flüssigen Diglycidylester einer cycloaliphatischen oder aromatischen Dicarbonsäure, oder ein cycloaliphatisches Epoxidharz. Es können auch Gemische von Epoxidharzen verwendet werden.

Als feste Polyglycidylether und -ester kommen Verbindungen mit Schmelzpunkten oberhalb Raumtemperatur bis etwa 250 °C in Betracht. Bevorzugt liegen die Schmelzpunkte der festen Verbindungen im Bereich von 50 bis 150 °C. Solche festen Verbindungen sind bekannt und zum Teil im Handel erhältlich. Als feste Polyglycidylether und - ester können auch die durch Vorverlängerung von flüssigen Polyglycidylethern und -estern erhaltenen Advancement-Produkte verwendet werden.

Als Zähigkeitsvermittler für die lagerstabilen Suspensionen A) kommen beispielsweise die als "rubber toughener" dem Fachman bekannten Elastomere oder Elastomere enthaltende Pfropfpolymere in Frage. Dabei können die Zähigkeitsvermittler im Ausgangszustand flüssig oder fest sein. Sie dürfen keine reaktiven Gruppen aufweisen, die mit dem jeweiligen Epoxidharz in der Suspension reagieren könnten. Vorzugsweise verwendet man feste Zähigkeitsvermittler. Feste Zähigkeitsvermittler umfassen beispielsweise die Pfropfpolymere, wie sie zum Beispiel in der US-A-3,496,250 und in der US-A-4,366,289 beschrieben sind, sowie sogenannte Core/Shell-Polymere, wie sie beispielsweise aus der EP-A-0-045 357 und der US-A-4,419,496 bekannt sind.

Insbesondere enthalten die lagerstabilen Suspensionen einen festen Zähigkeitsvermittler.

Feste Zähigkeitsvermittler bieten den Vorteil, dass die Teilchengrösse wie auch der Anteil der zähigkeitsvermittelnden Phase in der Suspension vorgegeben sind. Bei den flüssigen Zähigkeitsvermittlern wird die erforderliche zweite Phase erst während der Härtung mit dem Epoxidharz gebildet.

Beispiele für Pfropfpolymere sind Methacrylat/Butadien-Styrol-, Acrylat-Methacrylat/Butadien-Styrol-oder Acrylnitril/Butadien-Styrol-Polymere.

Core/Shell-Polymere haben in der Regel einen weichen Kern (Core) aus einem elastomeren Material, der im Epoxidharz unlöslich ist. Darauf aufgepfropft ist eine Schale (Shell) aus polymerem Material, die keine reaktionsfähige Gruppen aufweist. Das Core/ShellPolymer kann auch ein sogenanntes Multicore/Shell-Polymer sein, wie beispielsweise ein solches mit der Aufbaufolge weicher Kern, harte Schale, weiche Schale und harte Schale. Solche Polymere sind beispielsweise in der GB-A-2,039,496 beschrieben.

Beispiele für Elastomere, die als Core-Material eingesetzt werden können, sind Polybutadien, Polyacrylsäure- und Polymethacrylsäureester sowie deren Co- oder Terpolymere mit Polystyrol, Polyacrylnitril oder Polysulfid.

Beispiele für polymere Shell-Materialien sind Polystyrol, Polyacrylnitril, Polyacrylat-und -methacrylatmono-, -co- oder -terpolymere oder Styrol/Acrylnitril/Glycidylmethacrylat-Terpolymere.

Bevorzugt sind Suspensionen enthaltend als festen Zähigkeitsvermittler ein Core/Shell-Polymeres.

Die Grösse solcher Core/Shell-Partikel beträgt zweckmässig 0,05-30 µm, vorzugsweise 0,05-15 µm. Insbesondere gelangen Core/Shell-Partikel mit einer Grösse von kleiner als 1 µm zur Anwendung.

Die Core/Shell-Polymere lassen sich nach der z.B. in der US-A-4,419,496 oder der EP-A-0 045 357 beschriebenen Weise herstellen.

Insbesondere bevorzugt werden Core/Shell-Polymere eingesetzt, die einen Kern (Core) aus Polybutadien oder Polybutadien/Polystyrol enthalten. Dieses Core-Material ist vorzugsweise teilvernetzt. Weitere Core-Materialien sind Polyacrylate und -methacrylate, insbesondere Polyacrylsäure- und Polymethacrylsäureester sowie deren Co-oder Terpolymere.

Die Schale (Shell) besteht besonders bevorzugt aus Polymeren auf der Basis von Methylmethacrylat, Methacrylsäurecyclohexylester, Acrylsäurebutylester, Styrol und Methacrylnitril, insbesondere aber auf der Basis von Polymethylmethacrylat.

Die Menge an Zähigkeitsvermittler in den erfindungsgemässen, ein Epoxidharz enthaltenden Suspensionen beträgt vorzugsweise bis 80 Gew.-%, insbesondere bis 50 Gew.-%, bezogen auf das Epoxidharz.

Weiterhin eignen sich lagerstabile Suspensionen aus einem Epoxidharzhärtungsmittel und einem darin suspendierten Zähigkeitsvermittler in einfacher und praktischer Weise zur Herstellung von härtbaren Epoxidharzzusammensetzungen mit homogener Verteilung des Zähigkeitsvermittlers auch in der Epoxidharzzusammensetzung, wobei diese ebenfalls als Suspension vorliegen kann. Die erfindungsgemässen Suspensionen stellen somit verarbeitungstechnisch gesehen eine Vereinfachung zur Herstellung von härtbaren Epoxidharzzusammensetzungen mit homogener Verteilung eines darin enthaltenen Zähigkeitsvermittlers dar. Ausserdem wird bei der Herstellung solcher Epoxidharzzusammensetzungen in vorteilhafter Weise eine gewisse Qualitätskonstanz erreicht.

Das als Komponente B1) im Härtungsmittelgemisch B) verwendete Dicyandiamid wird im allgemeinen in Mengen von 1 bis 15 Gewichtsteilen pro 100 Gewichtsteile Epoxidharz eingesetzt.

Als Komponente B2) des Härtungsgemisches B) werden cycloaliphatische Polyamine eingesetzt. Insbesondere werden Polyamine, wie 1 ,2-Diaminocyclohexan, Bis-(4-aminocyclohexyl)-methan, Bis-(4-amino-3-methylcyclohexyl)-methan, 4-Aminocyclohexyl-4'-aminophenylmethan, 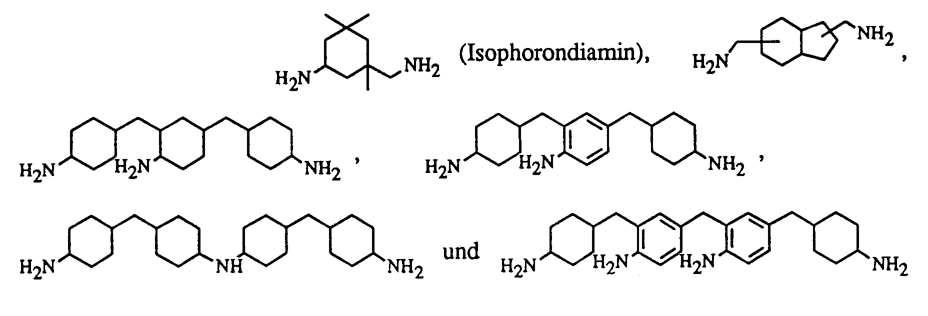 sowie Gemische dieser Aminverbindungen, verwendet.

Besonders bevorzugt sind Suspensionen enthaltend als Komponente B2) mindestens ein cycloaliphatisches Polyamin aus der Gruppe bestehend aus Bis-(4-aminocyclohexyl)-methan, Bis-(4-amino-3-methylcyclohexyl)-methan und

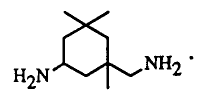

Als Komponente B3) des Härtungsgemisches B) werden Polyoxyalkylenamine eingesetzt. Polyoxyalkylenamine sind beispielsweise Polyoxyethylenamine und Polyoxypropylenamine des folgenden difunktionellen Typs: 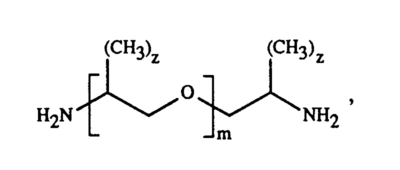 worin z 0 oder 1 ist, und m beispielsweise Werte von einschliesslich 2 bis 50 aufweisen kann. Die Polyoxyalkylenkette in den genannten Polyaminen kann jedoch auch verzweigt sein und mehr als zwei Aminogruppen im Molekül aufweisen. Weiterhin können z.B. Polyoxypropylenamine des folgenden (trifunktionellen) Typs verwendet werden:

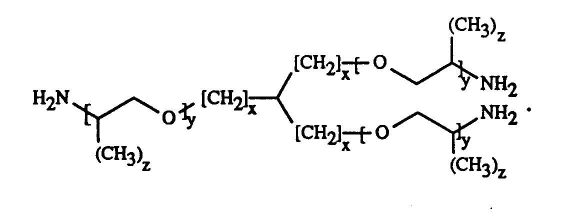

Die Indices x in dieser Formel können unabhängig voneinander 0 oder 1 sein, die Indices y können beispielsweise unabhängig voneinander Werte von 2 bis 50 haben, die von Kette zu Kette gegebenenfalls differieren und die Indices z sind unabhängig voneinander 0 oder 1.

Bestimmte Polyoxyalkylenamine, wie im vorhergehenden Abschnitt beschrieben, sind unter der Bezeichnung Jeffamine® der Firma Texaco Chemical Co. auch kommerziell erhältlich.

Bevorzugt sind Suspensionen enthaltend als Komponente B3) ein Polyoxypropylenamin oder ein Polyoxyethylenamin, oder ein Gemisch von beiden.

Insbesondere bevorzugt sind Suspensionen enthaltend als Komponente B3) ein Polyoxypropylenamin der Formel 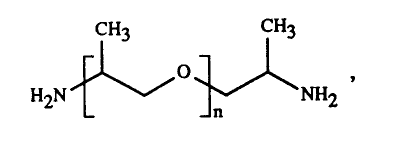 wobei n eine Zahl von 2 bis 40 ist.

Die Menge des eingesetzten Härtungsmittelgemisches B) richtet sich nach der chemischen Natur des Härtungsmittels und nach den gewünschten Eigenschaften der härtbaren Mischung und des gehärteten Produktes. Die maximale Menge kann leicht ermittelt werden. Es werden normalerweise 0,60 bis 1,25 Äquivalente Aminwasserstoff pro 1 Epoxidäquivalent eingesetzt, wobei der Anteil des cycloaliphatischen Polyamins normalerweise im Bereich von 5 bis 75 Äquivalentprozent liegt, und der Anteil des Polyoxyalkylenamins im allgemeinen im Bereich von 1 bis 15 Äquivalentprozent liegt. Katalytisch wirkende Härtungsmittel werden allgemein in Mengen von 1 bis 40 Gewichtsteilen pro 100 Gewichtsteile Epoxidharz eingesetzt.

Mit den Epoxidharzhärtungsmitteln können auch geeignete Härtungsbeschleuniger C) eingesetzt werden. Beispielsweise können als Beschleuniger tertiäre Amine oder deren Salze, quaternäre Ammoniumverbindungen oder Alkalimetallalkoxide verwendet werden. Die Härtungsbeschleuniger werden normalerweise in Mengen von 1 bis 20 Gewichtsteilen pro 100 Gewichtsteile Epoxidharz eingesetzt.

Die erfindungsgemässen Suspensionen können auch die in der Epoxidharztechnik üblichen Füllstoffe und Verstärkungsmaterilalien enthalten. Als Füllstoffe kommen beispielsweise die folgenden in Betracht: Mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit. Als Verstärkungsmaterialien eignen sich beispielsweise Glas- oder Kohlenstoffasern.

Die erfindungsgemässen Suspensionen werden nach an sich bekannten Methoden, wie mit Hilfe bekannter Mischaggregate, beispielsweise Rührer, Kneter, Walzen oder im Falle fester Substanzen in Trockenmischern, hergestellt.

Die Härtung der erfindungsgemässen Suspensionen zu Formkörpern, Beschichtungen oder dergleichen erfolgt in für die Epoxidharztechnik üblicher Weise, wie sie beispielsweise im "Handbook of Epoxy Resins", 1967, von H. Lee und K.Neville beschrieben wird.

Die erfindungsgemässen Suspensionen eignen sich ausgezeichnet als Giessharze, Laminierharze, Prepregs, Klebstoffe, Pressmassen, Beschichtungsmassen sowie als Umhüllungssysteme für elektrische und elektronische Bauteile. Insbesondere geeignet ist die Verwendung der erfindungsgemässen Suspensionen als Giessharz, Laminierharz, Prepreg oder Klebstoff.

Die folgenden Beispiele erläutern die vorliegende Erfindung weiter.

### Beispiel A: Synthese einer Diglycidylether-Core/Shell-Polymer-Suspension

a) Herstellung eines Core/Shell-Polymeres:
202,7 g Polybutadienlatex (BL 2004 K der Fa. Bayer AG) mit einem Feststoffgehalt von 59,2 % und 397,3 g deionisiertes Wasser werden in einem 1 Liter-Planschliffkolben, der mit Doppelmantel, Glasankerrührer, Thermometer, Kühler, Umlaufthermostat und Gasanschluss ausgerüstet ist, unter Stickstoff vorgelegt und mit 100 rpm (Umdrehungen pro Minute) gerührt. Das Gemisch wird auf 80°C ± 1°C aufgeheizt. Nach etwa 55 Minuten (min) ist eine Innentemperatur von 80°C erreicht. Nun wird mit dem Zutropfen von 120,0 g destilliertem Methacrylsäuremethylester (purum, der Firma Fluka, Schweiz) begonnen. Anschliessend wird eine Lösung von 4,0 g Kaliumperoxiddisulfat und 3,5 g Dodecylbenzolsulfonsäure-Na-salz in 110 ml destilliertem Wasser zugetropft. Nach 3,5 Stunden (h) liegt eine homogene, weisse Emulsion vor. Nach insgesamt 6 h 10 min ist die Zugabe des Methylmethacrylats sowie des Initiators beendet.
Es wird während weiteren 2 h bei 80°C nachgerührt. Am Ende dieser Zeit werden 3 ml einer 20%igen Emulsion von n-Octadecyl-3-(3,5-di-tert.-butyl-4-hydroxyphenyl)-propionat der homogenen weissen Emulsion beigegeben, und die gesamte Mischung wird dann auf Raumtemperatur (RT) abgekühlt. Bei RT ist die Emulsion ebenfalls homogen und weiss gefärbt. Sie wird durch Glaswolle filtriert. Es sind keine Agglomerate vorhanden. Die Emulsion wird auf 865 g verdünnt, was einen Festkörpergehalt von 27,2 % ergibt. Die so erhaltene Emulsion wird als Zähigkeitsvermittler (toughener) eingesetzt.
b) In einem 2 Liter-Planschliffkolben, der mit Glasankerrührer, Thermometer, Kühler, Destillationsrohr mit Vorlage und Vakuum-Anschluss ausgerüstet ist, werden 600 g flüssiger Bisphenol A-diglycidylether mit einem Epoxidgehalt von 5,42 Äquivalenten/kg vorgelegt. Zu diesem Epoxidharzgemisch werden 220,6 g der gemäss Beispiel Aa) hergestellten wässrigen Emulsion des Core/Shell-Polymers hinzugegeben. Dieses Gemisch wird dann während 15 min verrührt. Anschliessend wird das erhaltene homogene Gemisch auf etwa 80°C erwärmt und auf 15-20 kPa (150-200 mbar) entlüftet, wobei das Wasser abdestilliert. Gegen Ende der Destillation wird der Druck auf 4-5 kPa (40-50 mbar) erniedrigt, wobei innerhalb von etwa 30 min das restliche Wasser entfernt wird. Es wird eine homogene weisse, bei 80°C gut rührbare Suspension erhalten, die dann auf 50°C abgekühlt wird.

| | |
|---|---|
| Ausbeute: | 656 g |
| Epoxidgehalt: | 4,9 Äquivalente/kg |
| Gehalt an Zähigkeitsvermittler: | 10 phr*, bezogen auf das Epoxidharz. |

| | |
|---|---|
| *phr = parts per hundred (Gewichtsteile pro 100 Gewichtsteile Epoxidharz). | |

### Beispiel 1:

60,35 g der im obigen Beispiel A hergestellten Diglycidylether-Core/Shell-Polymer-Suspension, 25,86 g eines Epoxyd-Phenol-Novolakharzes mit einem Epoxidgehalt von 5,6 Äquivalenten/kg (Araldit® EPN 1138 der Fa. Ciba-Geigy AG), 5,06 g Dicyandiamid, 3,37 g 3,3'-Dimethyl-4,4'-diamino-dicyclohexylmethan, 4,01 g eines Polyoxypropylenamins (Jeffamine® D-400 der Fa. Texaco) und 1,35 g N,N''-4-Methyl-m-phenylenbis-(N',N'-dimethylharnstoff) werden zusammengegeben, auf etwa 60-70 °C erwärmt und gut verrührt. Zwecks Entfernung von eingeschlossenen Luftbläschen werden zur Giessharzmasse noch 0,06 Gew.-% Entschäumungsmittel Byk A 501 zugemischt; anschliessend wird das Gemisch 5 min unter Hochvakuum entlüftet und dann zur Herstellung von Formkörpern vergossen. Die Härtung erfolgt während 70 Minuten bei 140°C.
Die Formkörper weisen ein E-Modul aus Biegeversuch (ISO 178) von 2908 Mpa (2908 N/mm²), eine Biegefestigkeit (ISO 178) von 130 Mpa (130 N/mm²), eine Bruchzähigkeit G₁C (Bend Notch Methode gemäss CG-Norm PM 258-0/90) von 427,7 J/m² und K₁C von 1,227 MPa·m^{1/2} auf. Die Glasübergangstemperatur T_{g0} beträgt 137 °C (T_{g0} per TMA mit Mettlergerät Typ TA 3000).

### Beispiel 2:

86,96 g der im Beispiel A hergestellten Diglycidylether-Core/ShellPolymer-Suspension, 5,19 g Dicyandiamid, 3,73 g 3,3'-Dimethyl-4,4'-diamino-dicyclohexylmethan, 2,75 g eines Polyoxypropylenamins (Jeffamine® D-400 der Fa. Texaco) und 1,37 g N,N''-4-Methyl-m-phenylen-bis-(N',N'-dimethylharnstoff) werden zusammengegeben, auf etwa 60-70 °C erwärmt und gut verrührt. Zwecks Entfernung von eingeschlossenen Luftbläschen werden zur Giessharzmasse noch 0,06 Gew.-% Entschäumungsmittel Byk A 501 zugemischt; anschliessend wird das Gemisch 5 min unter Hochvakuum entlüftet und dann zur Herstellung von Formkörpern vergossen. Die Härtung erfolgt während 70 Minuten bei 140°C.
Die Formkörper weisen ein E-Modul aus Biegeversuch (ISO 178) von 2702 MPa (2702 N/mm²), eine Biegefestigkeit (ISO 178) von 123 Mpa (123 N/mm²), eine Bruchzähigkeit G₁C (Bend Notch Methode gemäss CG-Norm PM 258-0/90) von 749,1 J/m² und K₁C von 1,552 MPa·m^{1/2} auf. Die Glasübergangstemperatur T_{g0} beträgt 133 °C (T_{g0} per TMA mit Mettlergerät Typ TA 3000).

## Patentansprüche

1. Suspension einer Epoxidharzzusammensetzung, enthaltend
A) eine lagerstabile Suspension aus einem Epoxidharz und einem darin suspendierten Zähigkeitsvermittler, der bezüglich eines Epoxidharzsystems keine reaktiven Gruppen aufweist,
B) ein Härtungsmittelgemisch bestehend aus
B1) Dicyandiamid,
B2) einem cycloaliphatischen Polyamin und
B3) einem Polyoxyalkylenamin,
und gegebenenfalls
C) einen Härtungsbeschleuniger, übliche Füllstoffen, Verstärkungsmaterialien oder Zusätze.

2. Suspension gemäss Anspruch 1, enthaltend als Epoxidharz in Komponente A) einen flüssigen oder festen Polyglycidylether oder -ester oder ein cycloaliphatisches Epoxidharz.

3. Suspension gemäss Anspruch 2, enthaltend als Polyglycidylether einen flüssigen oder festen Bisphenoldiglycidylether oder als Polyglycidylester einen Diglycidylester einer cycloaliphatischen oder aromatischen Dicarbonsäure.

4. Suspension gemäss Anspruch 1, enthaltend in Komponente A) einen festen Zähigkeitsvermittler.

5. Suspension gemäss Anspruch 4, enthaltend als festen Zähigkeitsvermittler ein Core/Shell-Polymeres .

6. Suspension gemäss Anspruch 1, enthaltend als Komponente B2) mindestens ein cycloaliphatisches Polyamin aus der Gruppe bestehend aus 1,2-Diaminocyclohexan, Bis-(4-aminocyclohexyl)-methan, Bis-(4-amino-3-methylcyclohexyl)-methan 4-Aminocyclohexyl-4'-aminophenylmethan,

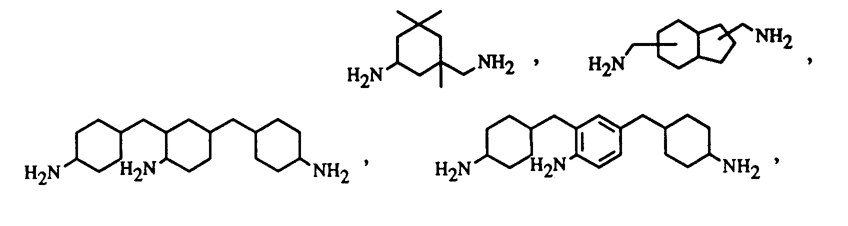

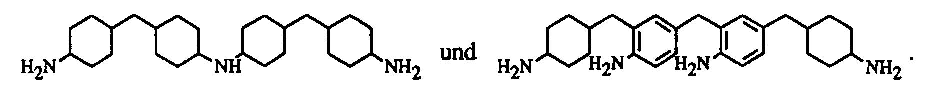

7. Suspension gemäss Anspruch 6, enthaltend mindestens ein cycloaliphatisches Polyamin aus der Gruppe bestehend aus Bis-(4-aminocyclohexyl)-methan,Bis-(4-amino-3-methylcyclohexyl)-methan und

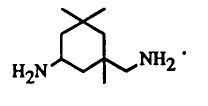

8. Suspension gemäss Anspruch 1, enthaltend als Komponente B3) ein Polyoxypropylenamin oder ein Polyoxyethylenamin oder ein Gemisch von beiden.

9. Suspension gemäss Anspruch 8, enthaltend ein Polyoxypropylenamin der Formel 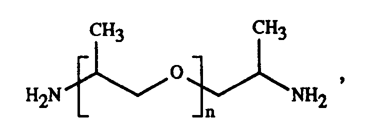 wobei n eine Zahl von 2 bis 40 ist.

10. Verwendung der Suspension gemäss Anspruch 1 als Giessharz, Laminierharz, Prepreg oder Klebstoff.

## Claims

1. A suspension of an epoxy resin composition, comprising
A) a storage-stable suspension consisting of an epoxy resin and a toughener suspended therein, which toughener does not contain any groups that react with an epoxy resin system,
B) a hardener mixture, consisting of
B1) dicyandiamide,
B2) a cycloaliphatic polyamine, and
B3) a polyoxyalkylene amine,
and, as optional components,
C) a curing accelerator, standard fillers, reinforcing agents or modifiers.

2. A suspension according to claim 1, wherein the epoxy resin in component A) is a liquid or solid polyglycidyl ether or polyglycidyl ester, or a cycloaliphatic epoxy resin.

3. A suspension according to claim 2, wherein the polyglycidyl ether is a liquid or solid diglycidyl ether of a bisphenol or the polyglycidyl ester is a diglycidyl ester of a cycloaliphatic or aromatic dicarboxylic acid.

4. A suspension according to claim 1, wherein component A) contains a solid toughener.

5. A suspension according to claim 4, wherein the solid toughener is a core/shell polymer.

6. A suspension according to claim 1, comprising as component B2) at least one cycloaliphatic polyamine selected from the group consisting of 1,2-diaminocyclohexane, bis (4-aminocyclohexyl)methane, bis(4-amino-3-methylcyclohexyl)methane, 4-aminocyclohexyl-4'-aminophenylmethane,

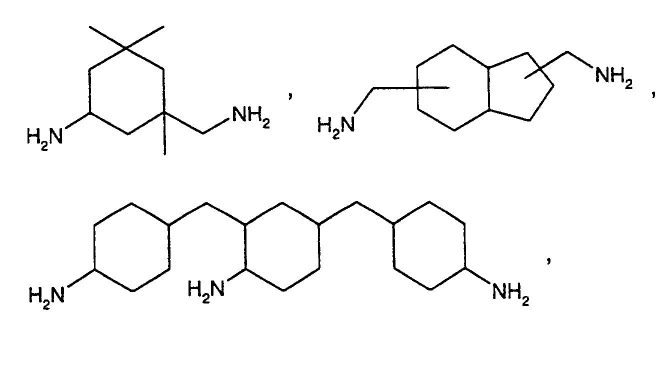

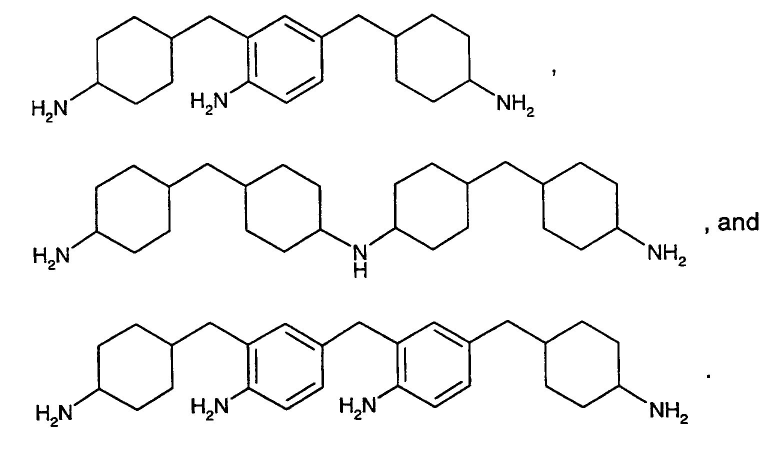

7. A suspension according to claim 6, comprising at least one cycloaliphatic polyamine selected from the group consisting of bis(4-aminocyclohexyl)methane, bis-(4-amino-3-methylcyclohexyl)methane and

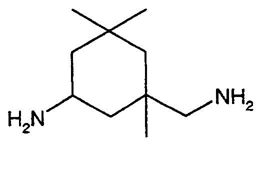

8. A suspension according to claim 1, wherein component B3) is a polyoxypropylene amine or a polyoxyethylene amine, or a mixture of both.

9. A suspension according to claim 8, comprising a polyoxypropylene amine of formula 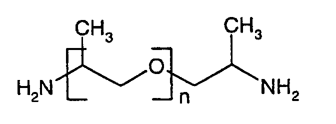 wherein n is an integer from 2 to 40.

10. Use of a suspension as claimed in claim 1 as casting resin, laminating resin, prepreg or adhesive.

## Revendications

1. Suspension d'une composition de résine époxyde, contenant
A) une suspension stable au stockage d'une résine époxyde et d'un agent de ténacité suspendu dans celle-ci, lequel ne présente pas de groupes réactifs sur un système de résine époxyde,
B) un mélange d'agents durcisseurs constitué par
B1) un dicyanodiamide,
B2) une polyamine cycloaliphatique et
B3) une polyalkylènepolyamine,
et éventuellement
C) un accélérateur de durcissement, des charges courantes, des matières de renfort ou des additifs.

2. Suspension selon la revendication 1, contenant, en tant que résine époxyde dans le constituant A), un éther ou ester polyglycidylique liquide ou solide ou une résine époxyde cycloaliphatique.

3. Suspension selon la revendication 2, contenant, en tant qu'éther polyglycidylique, un éther diglycidylique de bisphénol liquide ou solide ou, en tant qu'ester polyglycidylique, un ester diglycidylique d'un acide dicarboxylique cycloaliphatique ou aromatique.

4. Suspension selon la revendication 1, contenant dans le constituant A) un agent de ténacité solide.

5. Suspension selon la revendication 4, contenant, en tant qu'agent de ténacité, un polymère coeur/enveloppe.

6. Suspension selon la revendication 1, contenant en tant que constituant B2) au moins une polyamine cycloaliphatique prise dans le groupe comportant le 1,2-diaminocyclohexane, le bis-(4-aminocyclohexyl)-méthane, le bis-(4-amino-3-méthylcyclohexyl)-méthane, le 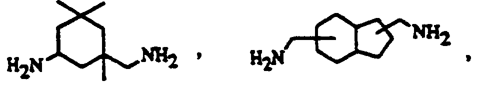 4-aminocyclohexyl-4'-aminophénylméthane,

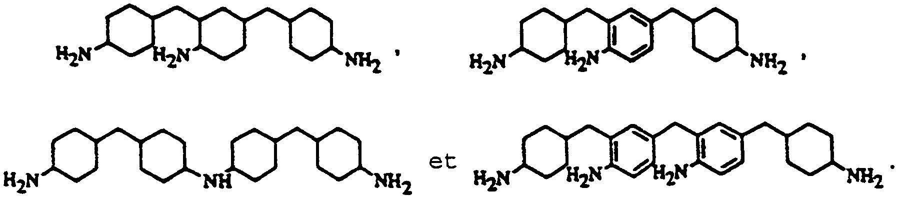

7. Suspension selon la revendication 6, contenant au moins une polyamine cycloaliphatique prise dans le groupe comportant le bis-(4-aminocyclohexyl)-méthane, le bis-(4-amino-3-méthylcyclohexyl)-méthane et

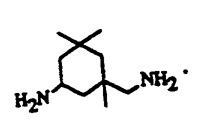

8. Suspension selon la revendication 1, contenant en tant que constituant B3) une polyoxypropylène amine ou une polyoxyéthylène amine ou un mélange des deux.

9. Suspension selon la revendication 8, contenant une polyoxypropylène amine de formule 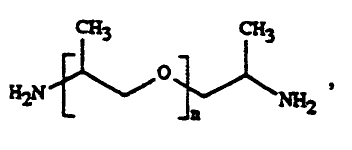 où n va de 2 à 40.

10. Utilisation de la suspension selon la revendication 1 en tant que résine à couler, résine à laminer, préimprégné ou adhésif.
